# EUROPÄISCHE PATENTANMELDUNG

(11) **EP 1 002 557 A2**
(43) Veröffentlichungstag der Anmeldung: **24.05.2000**
(21) Anmeldenummer: 99122860.2
(22) Anmeldetag: 17.11.1999
(51) Int. Cl.: A63C 5/00

(54) **Sportgerät**

(30) Priorität: 18.11.1998 DE 29820643 U
(71) Anmelder: Gruber, Martin, 39043 Klausen (IT); Krapf, Hans, 39043 Klausen (IT)
(72) Erfinder: Gruber, Martin, 39043 Klausen (IT); Krapf, Hans, 39043 Klausen (IT)
(74) Vertreter: Körber, Martin, Dipl.-Phys.

(57) **Zusammenfassung**

Die vorliegende Erfindung betrifft ein Sportgerät zum Gleiten auf einem geeigneten Untergrund, aufweisend einen länglichen schalenförmigen Aufbau, mit einem Sitz (6) für den Fahrer, jeweils einem Haltebügel (5) in Fahrtrichtung links und rechts des Sitzes (6), einer sich auf der Unterseite des Sportgerätes erstreckenden Gleitfläche (2), zwei gebogenen Kanten (14), die sich jeweils links und rechts neben der Gleitfläche (2) erstrecken und jeweils einen ersten Kurvenradius festlegen, und zwei gebogenen Kurveneinrichtungen (11), die jeweils außerhalb der Kanten (14) angeordnet sind, in Bezug auf deren gemeinsame Ebene zum Sitz (6) hin zurückgesetzt sind und jeweils einen zweiten Kurvenradius festlegen. Das erfindungsgemäße Sportgerät ermöglicht durch einfaches Kippen des Sportgerätes nach links oder rechts eine sichere Kurvenfahrt auch für ungeübte Fahrer.

## Beschreibung

Die vorliegende Erfindung betrifft ein Sportgerät zum Gleiten auf einem geneigten Untergrund.

Sportgeräte zum Gleiten auf einem geneigten Untergrund in Form von Rodeln oder Schlitten sind bekannt. Ein Schlitten weist üblicherweise eine Holzkonstruktion mit einer Sitzfläche auf, wobei an der Unterseite der Holzkonstruktion zwei starre längliche Kufen befestigt sind, die unten beispielsweise mit einer Metallschiene zur Verbesserung der Gleiteigenschaften ausgestattet sind. Rodel gibt es in verschiedenen Variationen. Sogenannte Sportrodel zeichnen sich dadurch aus, daß der auf dem Rodel liegende Rodler die beiden nach oben ragenden Enden der Kufen durch entsprechenden Druck mit den Beinen steuert. Während die bekannten Schlitten den Nachteil aufweisen, daß die Kufen gerade sind und eine Kurvenfahrt nur durch Schrägstellen des Schlittens möglich ist, sind Rodel, bei denen die Kurvenfahrt durch Ausübung eines Druckes mit den Beinen auf die aufgebogenen flexiblen Enden der Kufen gesteuert wird, für Laien und Hobbysportler kaum zu verwenden.

Der vorliegenden Erfindung liegt somit die Aufgabe zugrunde, ein Sportgerät zum Gleiten auf einem geneigten Untergrund zu schaffen, das auch ungeübten Fahrern auf einfache Weise eine sichere Kurvenfahrt ermöglicht.

Diese Aufgabe wird durch ein Sportgerät zum Gleiten auf einem geneigten Untergrund gemäß dem beigefügten Schutzanspruch 1 gelöst, das einen länglichen schalenförmigen Aufbau aufweist, und weiterhin einen Sitz für den Fahrer, jeweils einen Haltebügel in Fahrtrichtung links und rechts des Sitzes, eine sich auf der Unterseite des Sportgerätes erstreckende Gleitfläche, zwei gebogene Kanten, die sich jeweils rechts und links neben der Gleitfläche erstrecken und jeweils einen ersten Kurvenradius festlegen, und zwei gebogene Kurveneinrichtungen, die jeweils außerhalb der Kanten angeordnet sind, in Bezug auf deren gemeinsame Ebene zum Sitz hin zurückgesetzt sind und jeweils einen zweiten Kurvenradius festlegen.

Das erfindungsgemäße Sportgerät ermöglicht durch einfaches Kippen des Sportgerätes nach links oder rechts eine sichere Kurvenfahrt auch für ungeübte Fahrer, da durch die Biegung der Kanten bzw. der Kurveneinrichtungen der Kurvenradius festgelegt und eine stabile Kurvenfahrt ermöglicht wird, ohne daß das Sportgerät quergestellt werden muß. Bei einem leichten Kippen des Sportgerätes nach links oder rechts wird die Kurve auf der linken oder rechten gebogenen Kante durchfahren, wobei ein erster Kurvenradius ermöglicht wird. Wird das Sportgerät über die linke oder rechte gebogene Kante hinaus weitergekippt, so erfolgt die Kurvenfahrt auf der jeweiligen gebogenen Kurveneinrichtung mit einem zweiten Kurvenradius. Vorteilhafterweise ist dabei der erste Kurvenradius größer als der zweite Kurvenradius, so daß bei einem leichten Neigen des Sportgerätes ein größerer Kurvenradius gefahren werden kann, wobei ein weiteres Kippen des Sportgerätes zu einem engeren Kurvenradius führt. Damit können auch ungeübte Fahrer durch einfache Gewichtsverlagerung saubere Kurven fahren, wie sie bisher nur durch die schwierig zu steuernden Rennrodel möglich waren. Weitere Kanten- oder Kurveneinrichtungen können vorgesehen sein, wobei die Kurvenradien nach außen hin kleiner werden. Außerdem kann jede Kanten- und/oder Kurveneinrichtung in eine Anzahl entsprechender Abschnitte bzw. Segmente unterteilt sein, die gegenseitig verstellbar sein können, um die Kurvenradien zu variieren. Die Kanten- und/oder die Kurveneinrichtungen können aber auch in die Unterseite des Sportgerätes eingegossen sein.

Vorzugsweise weist das erfindungsgemäße Sportgerät eine Stoppereinrichtung zum Verhindern eines Gleitens entgegen der Fahrtrichtung auf. Diese Stoppereinrichtung kann einen Klappmechanismus aufweisen, durch den sie beim Gleiten in Fahrtrichtung automatisch einklappt. Durch diese Stoppereinrichtung wird, was insbesondere bei Anfängern wichtig ist, ein unbeabsichtigtes Rückwärtsgleiten oder Driften in den Kurven vermieden, wobei eine Vorwärtsfahrt durch das automatische Einklappen der Stoppereinrichtung unbeeinträchtigt bleibt. Hier wird auch der Schutz für Dritte verbessert, beispielsweise Fußgänger, die durch einen versehentlich rückwärts gleitenden Anfänger leicht verletzt werden können. Das erfindungsgemäße Sportgerät bietet somit im Vergleich zu herkömmlichen Schlitten oder Rodeln eine wesentlich erhöhte Sicherheit sowohl beim Kurvenfahren als auch in der sonstigen Handhabung. Weiterhin kann eine Leine vorgesehen sein, mit der das Sportgerät nach Art eines Surfbrettes zum Wellenreiten beispielsweise an einem Fuß des Fahrers befestigt werden kann, um bei einem Sturz nicht unkontrolliert davonzugleiten.

Weiterhin kann das erfindungsgemäße Sportgerät eine unterhalb des Sitzes angeordnete Dämpfungseinrichtung aufweisen. Diese Dämpfungseinrichtung kann beispielsweise ein Luftkissen sein. Das Luftkissen kann dabei beispielsweise über ein Ventil aufblasbar sein, wobei der Luftdruck und damit die Dämpfungseigenschaften auf das Gewicht und die Komfortansprüche des Fahrers eingestellt werden kann. Weiterhin kann als Dämpfungseinrichtung auch ein Plasmakissen oder dergleichen vorgesehen sein. Für den Fall, daß die Dämpfungseinrichtung nicht in das Sportgerät integriert ist, sondern daß die Oberfläche der Dämpfungseinrichtung gleichzeitig die Sitzfläche des Sitzes für den Fahrer bildet, kann diese Oberfläche rutschfest ausgebildet sein. Auch die Dämpfungseinrichtung erhöht die Sicherheit, da die Verletzungsgefahr bei starken Schlägen oder Sprüngen stark herabgesetzt wird.

Vorteilhafterweise sind die zwei Kurveneinrichtungen durch an der Unterseite des Sportgerätes vorgesehene Profile gebildet. Diese Profile können dabei auch als Kanten ausgebildet sein. Die Kurveneinrichtungen können aber auch separat bzw. lösbar mit der Unterseite verbunden sein, so daß auf unterschiedliche Untergrundbeschaffenheit reagiert werden kann. Das Gleiche gilt für die Kanten, die ebenfalls lösbar an der Unterseite des Sportgerätes angebracht sein können.

Die Biegung der Kanten und der Kurveneinrichtung kann zur Veränderung der Kurvenradien verstellbar sein. Dabei können die Kanten an Kufen angeordnet und die Kurveneinrichtungen beispielsweise durch an der Unterseite des Sportgerätes befestigte Kufen gebildet sein. Diese Kufen können beispielsweise in Abschnitte aufgeteilt sein, so daß die Verstellbarkeit der Biegung gewährleistet ist.

Vorteilhafterweise weisen die Kurveneinrichtungen jeweils eine Dämpfungseinrichtung auf, durch die Schläge gedämpft und eine bessere Kurvenlage erreicht wird.

Weiterhin ist es von Vorteil, wenn die Gleitfläche in Bezug auf die Sitzfläche verstellbar ist, wodurch eine Veränderung der Breite und der Höhe der Gleitfläche erfolgt.

Die erfindungsgemäße Ausgestaltung des Sportgerätes ermöglicht es, das Sportgerät im wesentlichen aus Kunststoff und Leichtmetall herzustellen. Das ist insbesondere deshalb von Vorteil, da diese Materialien ein optimales Verhältnis zwischen Stabilität und Gewicht besitzen. Durch eine entsprechende Kombination von Kunststoff und Leichtmetall im erfindungsgemäßen Sportgerät kann ein optimaler Kompromiß zwischen Stabilität, Lebensdauer, Bruchresistenz einerseits und Gewicht andererseits erzielt werden.

Das erfindungsgemäße Sportgerät ist dabei insbesondere für Anfänger oder ungeübte Fahrer von großem Vorteil, da es einfach durch die Kurven zu steuern ist. Andererseits kann das erfindungsgemäße Sportgerät auch von erfahrenen Fahrern verwendet werden, wobei beispielsweise Rennen nach Art von Skirennen durch Kippstangen bzw. Tore ausgetragen werden können. Weiterhin ist das erfindungsgemäße Sportgerät einfach zu transportieren, nämlich an den beiden Haltegriffen, wobei die Haltegriffe oder weitere Tragemittel dergestalt ausgebildet sein können, daß eine Befestigung des Sportgerätes an Aufstiegsanlagen, wie zum Beispiel Skiliften oder Sesselliften, möglich ist.

Die vorliegende Erfindung wird im folgenden anhand eines bevorzugten Ausführungsbeispieles unter Bezug auf die beigefügten Zeichnungen näher erläutert, in denen zeigen:
- Figur 1: eine Perspektivansicht eines erfindungsgemäßen Sportgerätes;
- Figur 2: eine Draufsicht auf das in Figur 1 dargestellte Sportgerät;
- Figur 3: einen Aufriß des vorderen Teils des in Figur 1 dargestellten Sportgerätes;
- Figur 4: einen Aufriß des mittleren Teils des in Figur 1 dargestellten Sportgerätes;
- Figur 5: eine seitliche Querschnittsansicht einer Kunststoffschale, die den Grundaufbau des in Figur 1 dargestellten Sportgerätes bilden kann;
- Figur 6: eine Unteransicht des in Figur 1 dargestellten Sportgerätes; und
- Figur 7a bis Figur 7i: verschiedene Schnittansichten der in Figur 5 dargestellten Kunststoffschale.

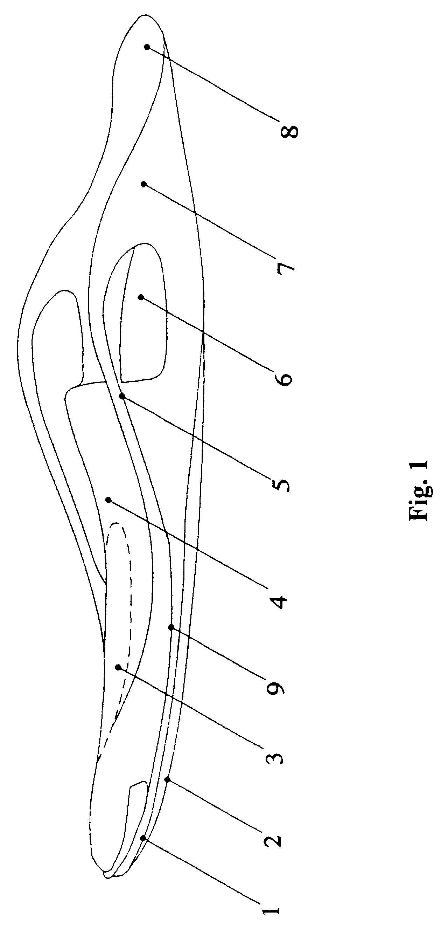

In Figur 1 ist eine Perspektivansicht eines erfindungsgemäßen Sportgerätes zum Gleiten auf einem geneigten Untergrund, beispielsweise auf Schnee oder dergleichen, gezeigt. Das erfindungsgemäße Sportgerät weist einen länglichen schalenförmigen Aufbau auf, mit einem Sitz 6 für den Fahrer und jeweils einem Haltebügel 5 in Fahrtrichtung links und rechts des Sitzes 6. Auf der Unterseite des Sportgerätes erstreckt sich eine Gleitfläche 2. Wie in Figur 1 zu sehen ist, ist zwischen den beiden Haltebügeln 5 eine Ausbuchtung 4 angeordnet, die sich, wenn der Fahrer auf dem Sitz 6 des Sportgerätes sitzt, zwischen den Beinen des Fahrers nach oben ragt. Diese Ausbuchtung 4 verhindert auch, daß der Fahrer beim Abbremsen in dem Sportgerät nach vorne rutscht. Links und rechts neben der Ausbuchtung 4, die ergonomisch an die menschliche Körperform angepaßt ist, werden die Beine des Fahrers angeordnet. Auf der in Fahrtrichtung vorderen Seite des Sportgerätes befindet sich eine Fußraste 1 für die Füße des Fahrers, an der sieh der Fahrer abstützen kann. Vor der Ausbuchtung 4 ist ein Stauraum 3 zur Aufnahme von Kleidung, Gepäck usw. vorgesehen.

Die in Fahrtrichtung hintere Seite des Sportgerätes ist durch eine Zunge 8 gebildet, auf die sich der Fahrer mit dem Rücken legen kann. Die Zunge 8 dient auf ihrer Unterseite als Verlängerung der Gleitfläche 2.

Wie in Figur 1 zu erkennen ist, ist das Sportgerät im wesentlichen schalenförmig ausgebildet, so daß der Fahrer, wenn er auf dem Sitz 6 sitzt bzw. liegt, zumindest links und rechts durch die Wandungen der nach oben ragenden Haltebügel 5 und durch die im Anschluß daran nach oben gezogene Wand des Sportgerätes sicher aufgenommen ist. Im vorderen Bereich dient die emporgezogene Wandung gleichzeitig als Sicherheitsbügel 9, durch die die Beine des Fahrers bei Kollisionen geschützt sind. Die sich von den Haltebügeln 5 nach hinten erstreckende Wandung der Sportgerätschale ist ebenfalls emporgezogen, so daß eine Fahrgastzelle 7 gebildet ist, die nach hinten in die Zunge 8 ausläuft.

Die Haltebügel 5 sind mit Ausnehmungen ausgebildet, so daß der Fahrer sich während des Gleitens an den Haltebügeln 5 festhalten kann und das Sportgerät durch Kippen nach rechts oder links um die longitudinale Achse steuern kann. Die Haltebügel 5 dienen ebenfalls zum Transport des Sportgerätes auf einem Auto oder an Aufstiegshilfen, wie zum Beispiel einem Sessellift oder einem Schlepplift.

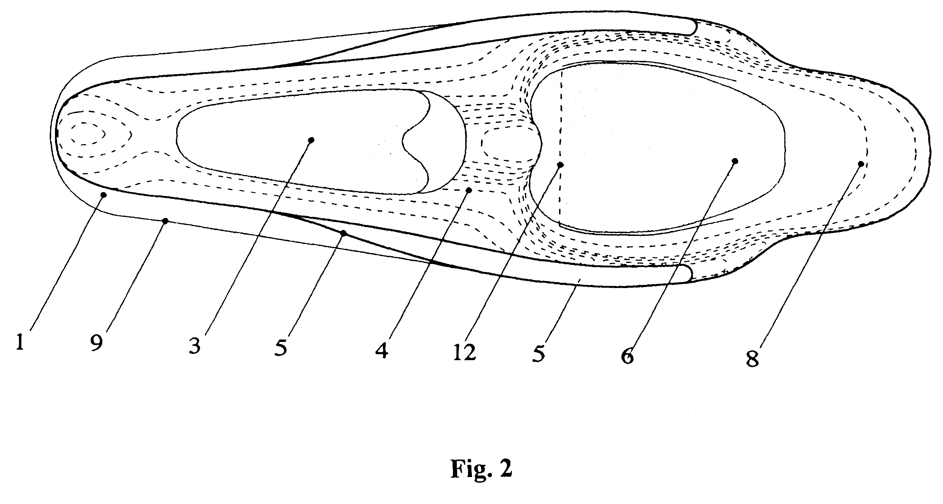

In Figur 2 ist eine Draufsicht auf das in Figur 1 gezeigte Sportgerät gezeigt. Deutlich ist der Stauraum 3 zwischen der ergonomischen Ausbuchtung 4 und der Fußraste 5 zu erkennen. Die Ausbuchtung 4 ist dergestalt an den menschlichen Körper angepaßt, daß sich der Fahrer bei starkem Bremsen nicht verletzen kann, gleichzeitig aber sicher zwischen der Ausbuchtung 4 und den die Haltebügel 5 bildenden Wandungen aufgenommen ist. Die Fußraste 1 ist durch eine vordere abschließende nach oben gezogene Wandung des Sportgerätes gebildet, an der sich der Fahrer mit den Füßen abstützen kann.

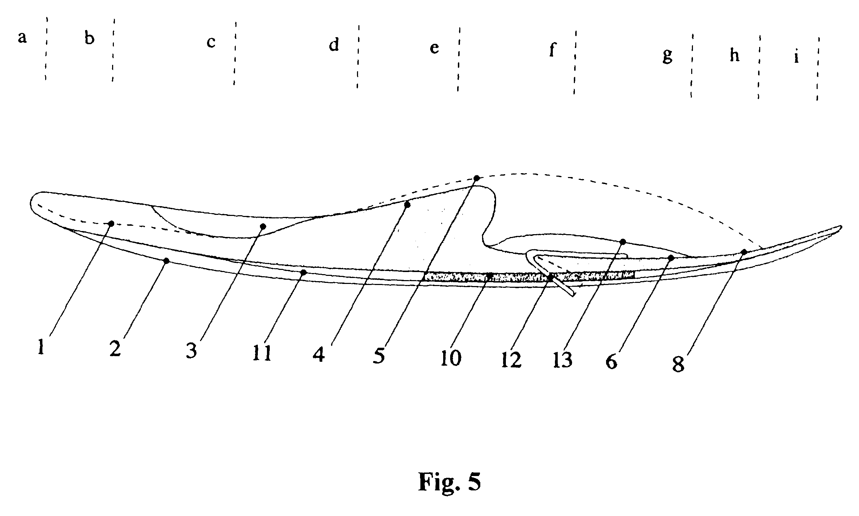

Weiterhin ist in Figur 2 eine Stoppereinrichtung 12 angedeutet, die in Bezug auf Figur 5 weiter unten erläutert wird. Die Fläche des Sitzes 6 und der Bereich zwischen den Wandungen der Fußraste 1 sind rutschfest ausgebildet, um dem Fahrer eine bessere Steuerung und Kontrolle des Sportgerätes zu ermöglichen.

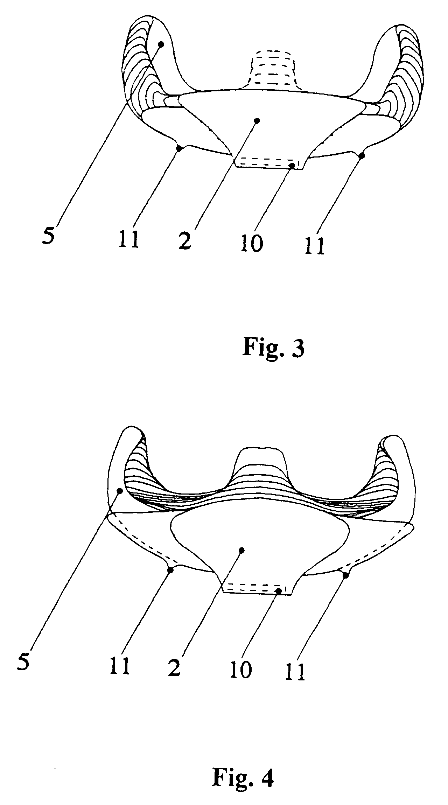

In Figur 3 ist ein Aufriß des vorderen Teiles des in Figur 1 dargestellten Sportgerätes von vorne dargestellt. Hier sind deutlich die seitlich emporgezogenen Wandungen des Sportgerätes zu erkennen, die ergonomisch ausgebildet sind und sich nach hinten erstrecken, wo sie im hinteren Bereich die Haltebügel 5 bilden. In der Mitte des Sportgerätes in longitudinaler Richtung ist die ergonomische Ausbuchtung 4 vorgesehen, die dem Fahrer Sicherheit und Halt bietet. Auf der Unterseite des Sportgerätes ist die Gleitfläche 2 angeordnet, die eine linke und eine rechte gebogene Kante 14 aufweist, die sich neben der Gleitfläche 2 erstrecken bzw. die Gleitfläche 2 begrenzen. Die linke und rechte gebogene Kante 14 sind tailliert, das heißt sind derart gekrümmt, daß sie relativ zueinander im Mittelbereich einen näheren Abstand aufweisen als vorne und hinten. Durch die Biegung der linken und rechten gebogenen Kante 14 wird ein erster Kurvenradius festgelegt, da beim leichten Verkippen des Sportgerätes um die longitudinale Achse nach rechts oder links das Sportgerät vom Gleiten auf der Gleitfläche 2 zum Gleiten auf der entsprechenden Kante 14 übergeht, die durch ihre entsprechende Biegung einen Kurvenradius festlegt. Der Winkel der Kanten 14 bezüglich der Gleitfläche 2 ist im vorderen Teil steiler und im hinteren Teil flacher, so daß auch ungeübten Fahrern eine sichere Kurvensteuerung möglich ist.

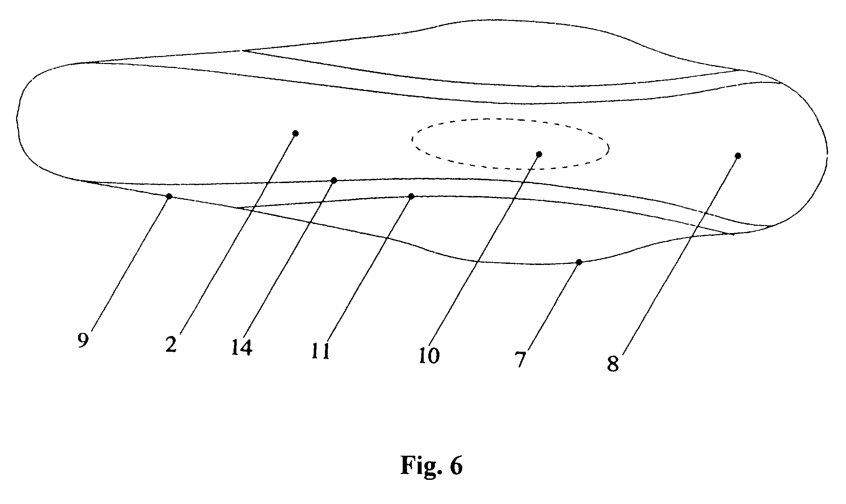

Weiterhin sind in Figur 3 auf der Unterseite des Sportgerätes außerhalb der rechten und linken Kante 14 zwei weitere von der Unterseite vorragende Kanten bzw. Profile 11 dargestellt. Die beiden Profile 11 bilden zwei gebogene Kurveneinrichtungen, die, wie in Figur 3 zu erkennen ist, in Bezug auf die Ebene der Gleitfläche 2 zur Sitzfläche hin nach oben zurückgesetzt sind. Die Kurveneinrichtungen 4 sind ebenfalls tailliert bzw. gebogen, so daß bei einem stärkeren Kippen des Sportgerätes über die linke bzw. rechte Kante 14 hinaus das Sportgerät auf der jeweiligen Kurveneinrichtung 11 gleitet, die jeweils einen zweiten Kurvenradius festlegen. Der von den Kurveneinrichtungen 11 festgelegte zweite Kurvenradius ist dabei vorteilhafterweise kleiner als der durch die rechte und linke gebogene Kante 14 festgelegte erste Kurvenradius, so daß durch stärkeres Verkippen des Sportgerätes engere Kurven gefahren werden können. Die Taillierung der linken und rechten gebogenen Kante 14 und der gebogenen Kurveneinrichtungen 11 ist in der in Figur 6 gezeigten Untersicht des in Figur 1 gezeigten Sportgerätes gut zu erkennen.

In Figur 4 ist ein weiterer Aufriß des in Figur 1 gezeigten Sportgerätes dargestellt, der als Querschnitt im Mittelbereich des Sportgerätes dargestellt ist. In dieser Ansicht ist die ergonomische Ausformung der Ausbuchtung 4 und der außen aufragenden, die Haltebügel 5 bildenden Wandungen zu erkennen. Weiterhin ist in Figur 4 zu erkennen, daß die beiden Kurveneinrichtungen 11 im Mittelteil des Sportgerätes weiter von der Gleitfläche 2 bzw. der linken und rechten gebogenen Kante 14 zurückgesetzt sind, als im vorderen Bereich des Sportgerätes, wie durch den Vergleich der Figuren 3 und 4 sofort ersichtlich ist. Weiterhin ist in den Figuren 3 und 4 die Dämpfungseinrichtung 10 angedeutet, die unterhalb des Sitzes 6 angeordnet ist und für einen angenehmen Fahrkomfort sowie Schutz vor Verletzungen sorgt. Diese Dämpfungseinrichtung 10 kann beispielsweise durch ein aufblasbares Luftkissen gebildet werden, dessen Luftdruck über ein Ventil eingestellt werden kann, um eine Anpassung an das Gewicht des Fahrers bzw. dessen Komfortansprüche zu ermöglichen.

Die Dämpfungseinrichtung 10 kann vorzugsweise abnehmbar bzw. austauschbar an dem Sportgerät befestigt sein, um Reparaturen zu ermöglichen. Weiterhin kann die Oberfläche der Dämpfungseinrichtung 10 gleichzeitig die Sitzfläche des Sitzes 6 bilden, wobei diese in diesem Fall rutschfest ausgebildet sein sollte.

In Figur 5 ist eine Querschnittsansicht einer beispielsweise aus Kunststoff gebildeten Schale dargestellt, die die Grundstruktur des in Figur 1 gebildeten Sportgerätes bilden kann. Die in Figur 5 in einem longitudinalen Querschnitt dargestellte Kunststoffschale stellt dabei das Grundgerüst des erfindungsgemäßen Sportgerätes mit Gleitfläche 2, ergonomischer Ausbuchtung 4, Fußraste 1, Sitz 6 und Zunge 8 dar. Diese aus Kunststoff bestehenden Elemente werden zusätzlich durch beispielsweise aus Leichtmetall bestehende Haltebügel 5 und die linke und rechte gebogene Kante 14 sowie die gebogenen Kurveneinrichtungen 11 auf der Unterseite ergänzt. In Figur 5 ist weiterhin die Stoppereinrichtung 12 zu erkennen, die unterhalb des Sitzes 6 angeordnet ist. Mittels eines Klappmechanismus ist die Stoppereinrichtung bei Vorwährtsfahrt einklappbar.

In Figur 6 ist die Unteransicht eines Ausführungsbeispieles des erfindungsgemäßen Sportgerätes dargestellt, bei dem die linke und rechte gebogene Kante 14 und die gebogenen Kurveneinrichtungen 11 in Form von Kanten bzw. Projektionen ausgebildet sind, wobei die linke und rechte gebogene Kante 14 die Gleitfläche 2 begrenzen und tailliert sind. Die Kanten 14 laufen dabei im wesentlichen von der Unterseite der Zunge 8 bis zur Vorderseite des Sportgerätes, während die Kurveneinrichtungen 11 kürzer sind. Die linke und rechte gebogene Kante 14 können dabei vorteilhafterweise im vorderen und hinteren Bereich des Sportgerätes in der bzw. unter die Gleitfläche 2 auslaufen, um eine Verkantung im vorderen bzw. hinteren Bereich zu vermeiden. Die Kanten 14 und die Kurveneinrichtungen 11 können jeweils aus Metallschienen separat montiert werden, wobei die Aufhängung bzw. Befestigung durch radial ausgerichtete Montagevorrichtungen erfolgt, die ein Verstellen des jeweiligen ersten bzw. zweiten Kurvenradiuses möglich machen. Zwischen den Kurveneinrichtungen 11 und der Unterseite des Sportgerätes kann dabei jeweils eine Dämpfungseinrichtung angeordnet werden, um auch bei ungleichmäßigem Untergrund eine saubere Kurvenfahrt zu gewährleisten.

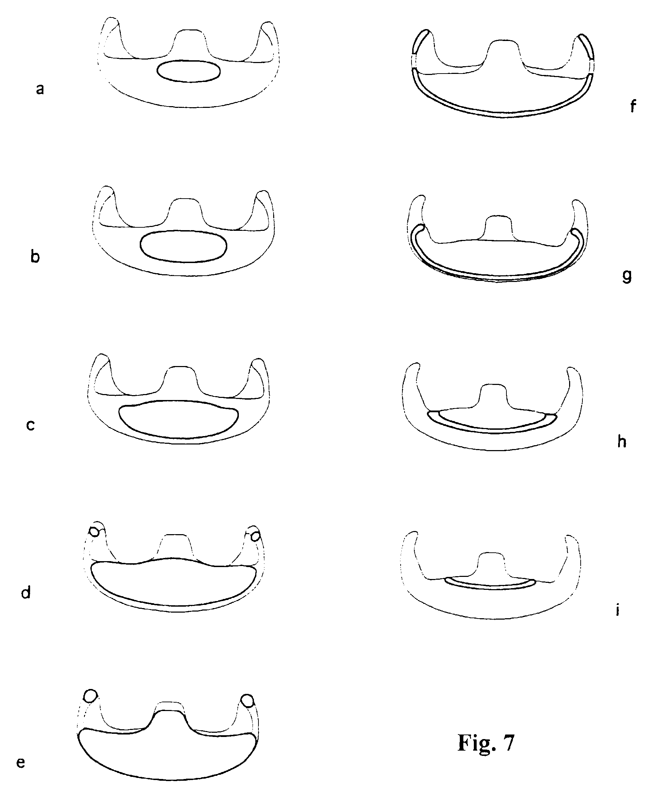

Weiterhin können die Kanten bzw. die Kurveneinrichtungen an der Schnittlinie mit einem härteren und korrosionsbeständigen Material überzogen bzw. eingezogen werden. Somit können abgeschliffene Kanten bzw. Kurveneinrichtungen durch neue ersetzt werden. Weiterhin wird über die gesamte Schnittlinie der Kanten bzw. Kurveneinrichtungen Material mit variierender Dichte verwendet, um Gewicht einzusparen. Die Ausführung des erfindungsgemäßen Sportgerätes aus Kunststoff und Leichtmetall ermöglicht eine optimale Abstimmung zwischen Stabilität und Gewicht. Wie in den in Figur 7a bis 7i dargestellten Schnitten a bis i, deren Position in Figur 5 angedeutet ist, dargestellt ist, hat die Kunststoffschale eine variierende Stärke, da in den verschiedenen Bereichen des Sportgerätes verschieden starke Kräfte auftreten.

Eine weitere Möglichkeit ist die Verstellung des Winkels der Gleitfläche 2 in Bezug auf den Sitz 6, was eine Veränderung der Breite und der Höhe der Gleitfläche zur Folge hat.

In den in Figuren 7a bis 7i dargestellten Schnittansichten der in Figur 5 dargestellten Kunststoffschale ist die Variation der Form und der Stärke der Kunststoffschale gut zu erkennen.

In einem weiteren Ausführungsbeispiel des Sportgerätes sind die linke und rechte gebogene Kante 14 und die gebogenen Kurveneinrichtungen 11 an jeweiligen Kufen angeordnet bzw. angebracht, die an der Unterseite des Sportgerätes befestigt sind. Dieses System der Aufhängung stellt eine bessere und flexiblere Verbindung dar und gewährleistet durch eine bessere Verteilung der Drehmomente in Kufenrichtung eine bessere und sicherere Steuerbarkeit des Sportgerätes. Zwischen den jeweiligen Kufe und dem Sportgerät können Dämpfungseinrichtungen, beispielsweise in Form von Gummieinlagen, angeordnet werden, die auch zur Einstellung des Relativwinkels zwischen Kufen und Untergrund herangezogen werden können. Hierdurch kann also einerseits eine Dämpfung der Vibrationen und eine Verbesserung des Fahrverhaltens durch Einstellung des Winkels zwischen Kufen und Untergrund und durch Einstellung der Dämpfung auf Körpergewicht und Fahrpraxis des Fahrers optimiert werden.

Als Material der Kufen bzw. der Kanten oder Kurveneinrichtungen wird vorzugsweise Leichtmetall verwendet, wobei jedoch auch Kunststoff mit ähnlichen Gleit- und Festigkeitseigenschaften angewendet werden kann. Vorzugsweise ist der Kanten- bzw. Kufenwinkel im in Fahrtrichtung vorderen Bereich steiler und im hinteren Bereich des Sportgerätes flacher, so daß das erfindungsgemäße Sportgerät auch für ungeübte Fahrer leicht in den Kurven zu steuern ist.

Das wird weiter durch die Fußraste 1, die durch eine Ausbuchtung in der Wandung des Sportgerätes gebildet ist, unterstützt, durch die ein Abrutschen der Füße des Fahrers verhindert und gleichzeitig eine sichere Steuerung des Sportgerätes gewährleistet wird. In diesem vorderen Bereich entspringt oberhalb der Gleitfläche 2 eine zweite Schale, die sogenannte Lenkschale, die in Figuren 3 und 4 zu erkennen ist und an der die erste und zweite Lenkeinrichtung 14 angebracht sind. Oberhalb dieser Lenkschale ist, wie ebenfalls in den Figuren 3 und 4 zu erkennen ist, eine weitere vorzugsweise aus Kunststoff gebildete Schale eingefügt, so daß insgesamt ein im wesentlichen dreischaliger Aufbau vorhanden ist.

Obwohl das erfindungsgemäße Sportgerät vorstehend als Einsitzer gezeigt und beschrieben wurde, kann es auch als Doppel- oder Mehrsitzer ausgebildet sein. Zu diesem Zweck kann das Sportgerät gegebenenfalls entsprechend verlängert und mit zusätzlichen Elementen versehen werden. Beispielsweise könnten zusätzliche Haltegriffe, zusätzliche Fußrasten und/oder eine zusätzliche Dämpfungseinrichtung vorgesehen sein.

Das erfindungsgemäße Sportgerät kann weiterhin so aufgebaut sein, daß es zum Gleiten auf Wasser verwendet werden kann. Dazu können beispielsweise Lufteinschlüsse in das Sportgerät integriert sein, durch die die notwendige Schwimmfähigkeit hergestellt wird. Die Lufteinschlüsse sind dabei der Gestalt verteilt, daß die notwendige Stabilität des Sportgerätes auch bei niedrigen Geschwindigkeiten oder Stillstand gewährleistet ist. Das Sportgerät kann dabei beispielsweise nach Art eines Wasserskis gezogen werden, wobei die Zugschnur entweder an dem Sportgerät selbst befestigt ist oder von dem Fahrer gehalten wird.

## Patentansprüche

1. Sportgerät zum Gleiten auf einem geeigneten Untergrund, aufweisend einen länglichen schalenförmigen Aufbau, mit
einem Sitz (6) für den Fahrer,
jeweils einem Haltebügel (5) in Fahrtrichtung links und rechts des Sitzes (6),
einer sich auf der Unterseite des Sportgerätes erstreckende Gleitfläche (2),
zwei gebogenen Kanten (14), die sich jeweils links und rechts neben der Gleitfläche (2) erstrecken und jeweils einen ersten Kurvenradius festlegen, und
zwei gebogenen Kurveneinrichtungen (11), die jeweils außerhalb der Kanten (14) angeordnet sind, in Bezug auf deren gemeinsame Ebene zum Sitz (6) hin zurückgesetzt sind und jeweils einen zweiten Kurvenradius festlegen.

2. Sportgerät gemäß Anspruch 1, **dadurch gekennzeichnet,** daß der erste Kurvenradius größer als der zweite Kurvenradius ist.

3. Sportgerät gemäß Anspruch 2, **gekennzeichnet durch** eine Stoppereinrichtung (12) zum Verhindern eines Gleitens entgegen der Fahrtrichtung.

4. Sportgerät gemäß Anspruch 1, **dadurch gekennzeichnet,** daß die Stoppereinrichtung (12) einen Klappmechanismus aufweist, durch den sie beim Gleiten in Fahrtrichtung automatisch einklappt.

5. Sportgerät gemäß Anspruch 1, 2, 3 oder 4, **gekennzeichnet durch** eine unterhalb des Sitzes (6) angeordnete Dämpfungseinrichtung (10).

6. Sportgerät gemäß Anspruch 5, **dadurch gekennzeichnet,** daß die Dämpfungseinrichtung (10) ein Luftkissen oder Plasmakissen ist.

7. Sportgerät gemäß einem der Ansprüche 1 bis 6, **dadurch gekennzeichnet,** daß die Biegung der Kanten und/oder der Kurveneinrichtungen (11) zur Veränderung des ersten bzw. zweiten Kurvenradius verstellbar sind.

8. Sportgerät gemäß einem der vorhergehenden Ansprüche, **dadurch gekennzeichnet,** daß die Kanten an Kufen angeordnet und die Kurveneinrichtungen (11) durch an der Unterseite des Sportgerätes befestigte Kufen gebildet sind.

9. Sportgerät gemäß einem der vorhergehenden Ansprüche, **dadurch gekennzeichnet,** daß die Kurveneinrichtungen (11) eine Dämpfungseinrichtung aufweisen.

10. Sportgerät gemäß einem der Ansprüche 1 bis 7, **dadurch gekennzeichnet,** daß die Kurveneinrichtungen (11) durch an der Unterseite des Sportgerätes vorgesehene Profile gebildet sind.

11. Sportgerät gemäß einem der vorhergehenden Ansprüche, **dadurch gekennzeichnet,** daß Gleitfläche (2) in Bezug auf den Sitz winkelverstellbar ist.
